(19) Europäisches Patentamt
European Patent Office
Office européen des brevets

(11) Publication number: 0 250 996 A2

(12) # EUROPEAN PATENT APPLICATION

(21) Application number: 87108549.4

(51) Int. Cl.4: C03C 25/02

(22) Date of filing: 13.06.87

(30) Priority: 21.06.86 JP 145726/86

(43) Date of publication of application: 07.01.88 Bulletin 88/01

(84) Designated Contracting States: DE FR GB

(71) Applicant: DAIKIN INDUSTRIES, LIMITED
Umeda Center Building 4-12 Nakazaki-nishi
2-chome Kita-ku
Osaka 530(JP)

(72) Inventor: Ohmori, Akira
16-22, Yamatedai 3-chome
Ibaraki-shi Osaka-fu(JP)
Inventor: Inukai, Hiroshi
8-11-710, Showaen
Settsu-shi Osaka-fu(JP)
Inventor: Kitahara, Takahiro
10-14, Senriokakami
Suita-shi Osaka-fu(JP)

(74) Representative: Schüler, Horst, Dr.
Kaiserstrasse 41
D-6000 Frankfurt/Main 1(DE)

(54) ## Optical fibers.

(57) The present invention provides an optical fiber comprising a core and a cladding, characterized in that the core is made of quartz or multicomponent glass and the cladding is made of a polymer consisting essentially of:

(i) about 50 % by weight to about 99.9 % by weight of a fluorine-containing acrylate represented by the formula

$CH_2=CX^1COORf$ (a)

(ii) about 0.1 % by weight to about 50 % by weight of an acrylate having functional group and represented by the formula

$CH_2=CX^2COR^1$ (b)

and

(iii) 0 to about 50 % by weight of an acrylate represented by the formula

$CH_2=CX^3COOR^2$ (c)

EP 0 250 996 A2

# OPTICAL FIBERS

## FIELD OF THE INVENTION

The present invention relates to optical fibers capable of transmitting optical signals.

## BACKGROUND OF THE ART

Optical fibers comprising a core of quartz or multicomponent glass and a cladding of fluorine-containing polymer are known (see Japanese Examined Patent Publication No.41966/1981). However, these optical fibers have the problem of being likely to cause scattering of light between the core and the cladding because of insufficient adhesion or union therebetween, resulting in incapability of transmitting optical signals to a remote destination.

## SUMMARY OF THE INVENTION

It is an object of the present invention to provide an optical fiber comprising a core (quartz or multicomponent glass) and a cladding (fluorine-containing polymer) firmly adhered to or securely united with each other.

Other objects and features of the present invention will become apparent from the following description.

We found that a fluorine-containing resin composed of a specific monomer or monomers can be firmly adhered or securely joined to quartz or multicomponent glass.The present invention has been accomplished based on this novel finding.

The present invention provides an optical fiber comprising a core and a cladding, characterized in that the core is made of quartz or multicomponent glass and the cladding is made of a polymer consisting essentially of:

(i) about 50 % by weight to about 99.9 % by weight of a fluorine-containing acrylate represented by the formula

$CH_2=CX^1COORf$ (a)

wherein $X^1$ is hydrogen, fluorine or methyl, Rf is fluoroalkyl having 2 to 40 carbon atoms (and optionally containing 1 to 3 oxygen atoms in the carbon atom chain);

(ii) about 0.1 % by weight to about 50 % by weight of an acrylate having functional group and represented by the formula

$CH_2=CX^2COR^1$ (b)

wherein $X^2$ is hydrogen, fluorine or methyl, $R^1$ is -OH, $-NH_2$, $-OCH_2CH_2Cl$, $-OCH_2CH=CH_2$,

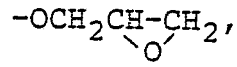

$-O(CH_2CH_2O)_jH$ (wherein j is an integer of 1 to 10), $-O(CH_2)_k Si(OR^3)_3$ (wherein $R^3$ is alkyl having 1 to 5 carbon atoms and optionally containing oxygen atom), and k is an integer of 1 to 5), or $-O(CH_2)_mSi(CH_3)_2(OSi(CH_3)_2)_nCH_3$ (wherein m is an integer of 1 to 5, and n is 0 or an integer of 1 to 5);
and

(iii) 0 to about 50 % by weight of an acrylate represented by the formula

$CH_2=CX^3COOR^2$ (c)

wherein $X^3$ is hydrogen, fluorine or methyl and $R^2$ is alkyl having 1 to 10 carbon atoms or alicyclic group.

## DETAILED DESCRIPTION OF THE INVENTION

The fluorine-containing polymer to be used as a cladding material in the present invention consists essentially of about 50 % by weight to about 99.9 % by weight of a fluorine-containing acrylate of the formula (a), about 0.1 % by weight to about 50 % by weight of an acrylate of the formula (b) and 0 to about 50 % by weight of an acrylate of the formula (c).

If less than 50 % by weight of the fluorine-containing acrylate of the formula (a) is used, the resulting polymer is given a higher refractive index, becoming difficult to use as a cladding. The acrylate of the formula (b) having functional group serves to improve the adhesion or degree of union between the quartz or multicomponent glass and the polymer. The acrylate of the formula (c) lowers the polymer cost.

The polymer to be used as a cladding material may contain other ethylenically unsaturated monomers unless the use thereof adversely affects the properties of optical fiber produced.

Examples of useful fluorine-containing acrylates of the formula (a) are $CH_2=C(CH_3)COOC(CF_3)_3$,
$CH_2=C(CH_3)COOCF(CF_3)_2$, $CH_2=C(CH_3)COOCH_2CF_3$,
$CH_2=C(CH_3)COOCH_2CF_2CF_3$, $CH_2=C(CH_3)COOCH_2(CF_2)_4H$,
$CH_2=C(CH_3)COOCH_2CH_2(CF_2)_6CF_3$,
$CH_2=C(CH_3)COOCH_2CH_2(CF_2)_6CF(CF_3)_2$,
$CH_2=C(CH_3)COOCH_2CH_2(CF_2)_7CF_3$,
$CH_2=CFCOOCH_2CF_2CF_3$,

$CH_2=CFCOOCH_2CH_2(CF_2)_6CF(CF_3)_2$,
$CH_2=CFCOOCH_2CF(CF_3)OCF_2CF(CF_3)OC_3F_7$,
$CH_2=CHCOOCH_2CF_2CF_2H$,
$CH_2=CHCOOCH_2CH_2CH_2CH_2CF_2CF_2$, etc.

Examples of useful acrylates of the formula (b) having functional group are $CH_2=CHCOOR^4$ - (wherein $R^4$ is glycidyl), $CH_2=C(CH_3)$-$COOCH_2CH_2OH$, $CH_2=C(CH_3)COOH$,
$CH_2=C(CH_3)COOCH_2CH_2CH_2Si(OCH_2CH_2)_3$,
$CH_2C(CH_3)COOCH_2CH_2CH_2Si(OCH_2CH_2OCH_3)_3$,
$CH_2=C(CH_3)COOCH_2CH_2CH_2Si(CH_3)_2OSi(CH_3)_3$,
$CH_2=C(CH_3)CONH_2$,
$CH_2=CFCOOCH_2CH_2Cl$,
$CH_2=CFCOOCH_2CH=CH_2$, etc.

Examples of useful acrylates of the formula (c) are $CH_2=C(CH_3)COOCH_3$, $CH_2=C(CH_3)COOC_{12}H_{25}$, $CH_2=C(CH_3)COOR^5$ (wherein $R^5$ is cyclohexyl), $CH_2=CFCOOCH_3$, $CH_2=CFCOOCH_2CH_3$, $CH_2=CHCOOCH_3$, etc.

Preferred polymers comprising these acrylates are those having an inherent viscosity ($\eta$) of about 0.3 to about 2.0 (when methyl ethyl ketone is used as a solvent at 35°C). The polymer having a lower inherent viscosity is brittle, whereas the polymer with a higher inherent viscosity tends to cause cobwebbing, becoming difficult to coat quartz.

The polymer to be used as a cladding material in the present invention can be prepared by the process for preparing known fluorine-containing acrylate polymers (e.g., see Japanese Examined Patent Publication No.24302/1979).

Examples of quartz or multicomponent glass useful as a core material in the present invention include known materials (e.g., see Japanese Unexamined Patent Publication No.152750/1975).

The optical fibers of the present invention can be prepared, for example, by applying a solution of said polymer as a cladding material to a core material, and drying the coated fiber. The application of the polymer solution is conducted usually using a conical die. Inexpensive and low-toxicity solvents are usable as those in which the cladding component polymer is dissolved. Preferred examples of useful solvents are methyl isobutyl ketone, ethyl acetate, acetone, methyl ethyl ketone, cellosolve acetate and the like. Also usable as such are dimethylacetamide, dimethylformamide, trichlorotrifluoroethane, metaxylenehexafluoride, chloroform, tetrahydrofuran, dioxane and the like. To facilitate the drying, it is preferred to use solvents having a boiling point of about 50°C to about 200°C. When a solution of the polymer is used at a concentration of about 1 % by weight to about 50% by weight, the cladding is given a preferred thickness of about 3 $\mu$m to about 30 $\mu$m. The coated fiber can be dried at a temperature of between room temperature to about 200°C. Quick drying may be achieved by heating with an infrared lamp, an electric drier or the like.

The optical fibers of the present invention have quartz or multicomponent glass as a core material firmly adhered or securely joined to a fluorine-containing polymer as a cladding material. Further the fluorine-containing polymer as the cladding material of the invention is flexible. With these characteristics, the optical fibers of the invention even when noticeably bent are free of the likelihood for the cladding to be peeled off the core and to develop any crack.

## EXAMPLES

### Example 1

Into a 1-liter glass ampoule were placed 240 g of $CH_2=C(CH_3)COOCH_2CF_2CF_2H$, 250 g of $CH_2=C$-$(CH_3)COOCH_2(CF_2)_4H$, 10 g of $CH_2=C(CH_3)COOH$, 2 g of azobisisobutyronitrile and 0.8 g of lauryl mercaptan. After executing three cycles of freeze-thaw and nitrogen replacement, the ampoule was sealed off by melting and was placed in a thermostatic chamber at 70°C for 24 hours.

Thereafter the polymer thus prepared was dissolved in 2 liter of acetone and the solution was poured into 10 liter of n-hexane to precipitate the polymer. The polymer was separated and dried under reduced pressure at 140°C for 24 hours.

The polymer thus obtained was found to have a refractive index ($n_D^{25}$) of 1.415, a glass transition temperature (Tg, differential scanning calorimeter) of 63°C, thermal decomposition temperature (Td, differential scanning calorimeter) of 281°C and inherent viscosity ([$\eta$], solvent: methyl ethyl ketone, temp.: 35°C) of 0.680.

The dried polymer was dissolved in methyl isobutyl ketone at a concentration of 10% by weight. A fiber of quartz 200 $\mu$m in diameter was immersed for 10 seconds in the solution at 25°C, lifted vertically from the solution at a rate of 3 cm/sec, and heated by an infrared lamp for 1 minute, giving a dried fiber. The dried optical fiber was cut to measure the mean thickness of the cladding under a scanning electron microscope (product of Hitachi Ltd.), which thickness was 10 $\mu$m.

The light transmission of the optical fiber per 1-m length of the fiber was 95% as measured with a tungsten lamp as a light source. The optical fiber was also subjected to bend test. The test results revealed that the bend test (even at 10R) caused no

peeling of the cladding from the core nor developed any crack in the cladding and also that the transmission remained unchanged (95%) after 100 cycles of bending and stretching (10R).

Example 2

Polymerization was conducted in the same manner and under the same conditions as in Example 1 with the exception of using 250 g of $CH_2=CFCOOCH_2CF_2CF_3$, 240 g of $CH_2=CFCOOCH_3$, 10 g of $CH_2=CHCOOCH_2CH_2OH$, 1 g of azobisisobutyronitrile and 3 g of lauryl mercaptan. Thereafter, using the polymer thus obtained, an optical fiber was prepared.

The resulting optical fiber was found to include a cladding 8 µm in mean thickness and to have a light transmission of 94% per 1-m length of the fiber. Bend test (10R) showed no separation of the core from the cladding nor crack in the cladding. The transmission remained the same (94%) after 100 cycles of bending and stretching (10R).

The copolymer used as the cladding material was 1.412 in $n_D^{25}$, 120°C in Tg, 320°C in Td and 0.602 in [η].

Example 3

Into a 1-liter flask equipped with a stirrer, condenser, dropping funnel and nitrogen inlet tube were placed 160 g of $CH_2=C(CH_3)COOCH_2(CF_2CF_2)_2H$, 30 g of $CH_2=C(CH_3)COOCH_3$, 10 g of $CH_2=C(CH_3)COOCH_2CH_2CH_2Si(OC_2H_5)3$, 0.1 g of lauryl mercaptan and 190 g of methyl isobutyl ketone. After nitrogen replacement, the flask was placed into a thermostatic chamber at 60°C. When the flask was heated to a temperature of 60°C, a solution containing 0.5 g of azobisisobutyronitrile and 10 g of methyl isobutyl ketone was added dropwise to initiate polymerization.

After 24 hours of polymerization, 1 liter of acetone was added to the reaction mixture and the solution obtained was poured into 6 liter of petroleum ether to precipitate the copolymer.

The copolymer thus obtained was 1.419 in $n_D^{25}$, 65°C in Tg, 276°C in Td and 0.521 in [η].

Thereafter an optical fiber was produced by repeating the same procedure as in Example 1. The resulting optical fiber was found to have a cladding 10 µm in mean thickness and to be 94% per 1-m fiber length in light transmission. Bend test (10R) indicated no separation of the core from the cladding nor crack in the cladding. The transmission was 93% after 100 cycles of bending and stretching (10R).

Example 4

Polymerization was performed in the same manner as in Example 1 with the exception of using as monomers 95 g of $CH_2=C(CH_3)COOCH_2(CF_2CF_2)_2H$, 95 g of $CH_2=C(CH_3)COOCH_2CF_2CF_2H$ and 10 g of

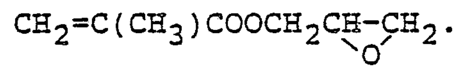

The copolymer thus obtained was 1.413 in $n_D^{25}$, 66°C in Tg, 271°C in Td and 0.531 in [η].

Methyl isobutyl ketone was added to the polymer solution to a solids concentration of 10% by weight. An optical fiber was produced in the same manner as in Example 1. The resulting optical fiber was 93% per 1-m fiber length in light transmission and showed no separation of the core from the cladding nor crack in the cladding when subjected to bend test (10R). The transmission was retained at the same level (93%) after 100 cycles of bending and stretching (10R).

Comparison Example

Polymerization was effected in the same manner as in Example 1 with the exception of using as monomers 240 g of $CH_2=C(CH_3)COOCH_2CF_2CF_2H$, 250 g of $CH_2=C(CH_3)COOCH_2(CF_2)_4H$ and 10 g of $CH_2=C(CH_3)COOCH_3$.

The copolymer thus obtained was 1.412 in $n_D^{25}$, 66°C in Tg, 283°C in Td, and 0.540 in [η].

Methyl isobutyl ketone was added to the polymer solution to a solids concentration of 10% by weight. The same subsequent procedure as in Example 1 was repeated, giving an optical fiber. The optical fiber thus prepared was 95% per 1-m fiber length in light transmission. However, the cladding had cracks developed in 10R bend test and the transmission was reduced to 40% after 100 cycles of bending and stretching (10R).

## Claims

1. An optical fiber comprising a core and a cladding, characterized in that the core is made of quartz or multicomponent glass and the cladding is made of a polymer consisting essentially of:

(i) about 50 % by weight to about 99.9 % by weight of a fluorine-containing acrylate represented by the formula

$CH_2=CX^1COORf$ (a)

wherein $X^1$ is hydrogen, fluorine or methyl, Rf is

fluoroalkyl having 2 to 40 carbon atoms (and optionally containing I to 3 oxygen atoms in the carbon atom chain);

(ii) about 0.I % by weight to about 50 % by weight of an acrylate having functional group and represented by the formula

$CH_2=CX^2COR^1$ (b)

wherein $X^2$ is hydrogen, fluorine or methyl, $R^1$ is -OH, $-NH_2$, $-OCH_2CH_2Cl$, $-OCH_2CH=CH_2$,

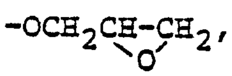

$-O(CH_2CH_2O)_jH$ (wherein j is an integer of I to I0), $-O(CH_2)_k Si(OR^3)_3$ (wherein $R^3$ is alkyl having I to 5 carbon atoms and optionally containing oxygen atom), and k is an integer of I to 5), or $-O(CH_2)_mSi(CH_3)_2(OSi(CH_3)_2)_nCH_3$ wherein m is an integer of I to 5, and n is 0 or an integer of I to 5); and

(iii) 0 to about 50 % by weight of an acrylate represented by the formula

$CH_2 CX^3COOR^2$ (c)

wherein $X^3$ is hydrogen, fluorine or methyl and $R^2$ is alkyl having I to I0 carbon atoms or alicyclic group.

2. An optical fiber according to claim I wherein the fluorine-containing acrylate of the formula (a) is at least one of $CH_2=C(CH_3)COOC(CF_3)3$, $CH_2=C(CH_3)COOCF(CF_3)_2$, $CH_2=C(CH_3)COOCH_2CF_3$, $CH_2=C(CH_3)COOCH_2CF_2CF_3$, $CH_2=C(CH_3)COOCH_2(CF_2)_4H$, $CH_2=C(CH_3)COOCH_2CH_2(CF_2)_6CF_3$, $CH_2=C(CH_3)COOCH_2CH_2(CF_2)_6CF(CF_3)_2$, $CH_2=C(CH_3)COOCH_2CH_2(CF_2)_7CF_3$, $CH_2=CFCOOCH_2CF_2CF_3$, $CH_2=CFCOOCH_2CH_2(CF_2)_6CF(CF_3)_2$, $CH_2=CFCOOCH_2CF(CF_3)OCF_2CF(CF_3)OC_3F_7$ and $CH_2=CHCOOCH_2CF_2CF_2H$, $CH_2=CHCOOCH_2CH_2CH_2CH_2CF_2CF_2$.

3. An optical fiber according to claim I wherein the acrylate of the formula (b) having functional group is at least one of $CH_2=CHCOOR^4$ (wherein $R^4$ is glycidyl), $CH_2=C(CH_3)COOCH_2CH_2OH$, $CH_2=C(CH_3)COOH$, $CH_2=C(CH_3)COOCH_2CH_2CH_2Si(OCH_2CH_2)_3$, $CH_2C(CH_3)COOCH_2CH_2CH_2Si(OCH_2CH_2OCH_3)_3$, $CH_2=C(CH_3)COOCH_2CH_2CH_2Si(CH_3)_2OSi(CH_3)_3$, $CH_2=C(CH_3)CONH_2$, $CH_2=CFCOOCH_2CH_2Cl$ and $CH_2=CFCOOCH_2CH=CH_2$.

4. An optical fiber according to claim I wherein the acrylate of the formula (c) is at least one of $CH_2=C(CH_3)COOCH_3$, $CH_2=C(CH_3)COOC_{12}H_{25}$, $CH_2=C(CH_3)COOR^5$ (wherein $R^5$ is cyclohexyl), $CH_2=CFCOOCH_3$, $CH_2=CFCOOCH_2CH_3$ and $CH_2=CHCOOCH_3$.

5. An optical fiber according to claim I wherein the polymer constituting the cladding has an inherent viscosity of about 0.3 to about 2.0 (when methyl ethyl ketone is used as a solvent at 35°C.

6. A process for preparing an optical fiber comprising the steps of applying a solution of a polymer as a cladding material to a core material, and drying the coated fiber, said polymer consisting essentially of:

(i) about 50 % by weight to about 99.9 % by weight of a fluorine-containing acrylate represented by the formula

$CH_2=CX^1COORf$ (a)

wherein $X^1$ is hydrogen, fluorine or methyl, Rf is fluoroalkyl having 2 to 40 carbon atoms (and optionally containing I to 3 oxygen atoms in the carbon atom chain);

(ii) about 0.I % by weight to about 50 % by weight of an acrylate having functional group and represented by the formula

$CH_2=CX^2COR^1$ (b)

wherein $X^2$ is hydrogen, fluorine or methyl $R^1$ is -OH, $-NH_2$, $-OCH_2CH_2Cl$, $-OCH_2CH=CH_2$,

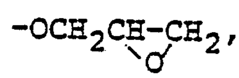

$-O(CH_2CH_2O)_jH$ (wherein j is an integer of I to I0), $-O(CH_2)_k Si(OR^3)_3$ (wherein $R^3$ is alkyl having I to 5 carbon atoms and optionally containing oxygen atom), and k is an integer of I to 5), or $-O(CH_2)_mSi(CH_3)_2(OSi(CH_3)_{2n}CH_3$ (wherein m is an integer of I to 5, and n is 0 or an integer of I to 5); and

(iii) 0 to about 50 % by weight of an acrylate represented by the formula

$CH_2=CX^3COOR^2$ (c)

wherein $X^3$ is hydrogen, fluorine or methyl and $R^2$ is alkyl having I to I0 carbon atoms or alicyclic group.